# EUROPÄISCHE PATENTSCHRIFT

(11) **EP 0 697 120 B1**
(45) Veröffentlichungstag und Bekanntmachung des Hinweises auf die Patenterteilung: **05.02.1997**
(21) Anmeldenummer: 94912484.6
(22) Anmeldetag: 25.04.1994
(51) Int. Cl.: G05B 15/02, G05B 17/00, F01K 13/02

(54) **FÜHRUNGSGERÄT FÜR ERZEUGER ELEKTRISCHER ENERGIE**
MANAGEMENT EQUIPMENT FOR GENERATORS OF ELECTRICAL ENERGY
APPAREIL DE GESTION POUR GENERATEURS D'ENERGIE ELECTRIQUE

(30) Priorität: 07.05.1993 DE 4315317
(43) Veröffentlichungstag der Anmeldung: 21.02.1996
(73) Patentinhaber: SIEMENS AKTIENGESELLSCHAFT, 80333 München (DE)
(72) Erfinder: KÜRTEN, Heribert, D-91080 Uttenreuth (DE); WAGNER, Herbert, D-91054 Buckenhof (DE); BAYER, Wolfgang, D-91052 Erlangen (DE)
(86) Internationale Anmeldenummer: DE9400453
(87) Internationale Veröffentlichungsnummer: WO9427195

(56) Entgegenhaltungen:
- WO-A-93/08516
- DE-A- 4 135 803

## Beschreibung

Die Erfindung bezieht sich auf ein Führungsgerät zur automatischen Steuerung von Kraftwerksblöcken in einem elektrischen Energieversorgungssystem gemäß dem Oberbegriff des Anspruchs 1.

Aus der DE 41 35 803 A1 ist eine Einrichtung zum Steuern einer aus einer Anzahl von Kraftwerksblöcken aufgebauten Kraftwerksanlage mittels eines verteilten Computersystems bekannt. Zur Gewährleistung vereinfachter Betriebsabläufe gibt eine zentrale Überwachungs- und Steuereinrichtung Informationen in blockspezifische Speicher ein und Befehle zum Betrieb der Kraftwerksblöcke aus.

In einem elektrischen Energieversorgungssystem setzt eine sichere Energieversorgung darüber hinaus eine sorgfältige Abstimmung zwischen der Erzeugung elektrischer Energie durch eine Anzahl von Kraftwerksblöcken und der Abnahme dieser Energie durch eine Anzahl von Verbrauchern in einem elektrischen Verteilungsnetz voraus. Sind Erzeugung und Abnahme der elektrischen Energie gleich groß, so ist die Netzfrequenz, die eine wesentliche Kenngröße in einem elektrischen Netz ist, konstant. Ihr Nennwert beträgt z.B. im europäischen Verbundnetz 50 Hz. Eine Frequenzabweichung, die z.B. durch den Ausfall eines Kraftwerksblocks und durch Zu- oder Abschalten eines Verbrauchers auftritt, kann als Maß für eine Erhöhung bzw. Absenkung der Erzeugerleistung betrachtet werden. Dabei hängt das Frequenzverhalten unter anderem von der Anzahl der in das Energieversorgungssystem eingebundenen Kraftwerksblöcke ab.So führt eine Störung infolge eines Blockausfalls in einem relativ großen Verbundnetz zu einem wesentlich geringeren Netzfrequenzeinbruch als in einem vergleichsweise kleinen Inselnetz.

Wie in der Druckschrift "VGB Kraftwerkstechnik", Heft 1, Januar 1980, Seiten 18 bis 23, beschrieben, besteht neben einer Ausregelung von Frequenzabweichungen innerhalb eines Energieversorgungssystems eine weitere Aufgabe darin, eine vorgegebene Übergabeleistung an Kuppelstellen zu benachbarten Versorgungsnetzen einzuhalten. Somit werden, z.B. von der Deutschen Verbundgesellschaft e.V. (DVG), bestimmte Anforderungen an die Frequenz- und Leistungsregelung eines Kraftwerksblocks gestellt. Eine Forderung besteht z.B. darin, daß eine Leistungserhöhung von 5 % der Nennleistung eines Kraftwerksblocks innerhalb von 30 Sekunden und die Hälfte der Leistungserhöhung, also 2,5 %, bereits nach 5 Sekunden verfügbar ist.

Möglichkeiten zur Leistungsregelung und Frequenzstützung sind in dem bereits genannten Dokument "VGB-Kraftwerkstechnik", Heft 1, Januar 1980, Seiten 19 bis 23, beschrieben. Während für eine schnelle Leistungsänderung im Bereich von Sekunden mehrere gleichzeitig oder alternativ durchführbare Eingriffsmöglichkeiten bestehen, ist für eine bleibende Veränderung der Leistung eines Kraftwerksblocks eine Änderung der Brennstoffzufuhr erforderlich. In einem fossil befeuerten Kraftwerksblock entstehen zwangsläufig zwischen einer Erhöhung der Brennstoffzufuhr oder Feuerleistung und der dadurch bedingten Leistungserhöhung Verzugszeiten im Dampferzeuger. Um bei einem Frequenzeinbruch derartige Verzugs zeiten zu überbrücken, werden innerhalb der ersten 5 bzw. 30 Sekunden z.B. zuvor in gedrosselter Stellung gehaltene Stellventile einer Dampfturbine geöffnet und dadurch verfügbare Dampfspeicher praktisch ohne Verzögerung aktiviert und entladen.

Neben einer Leistungserhöhung durch die Aufhebung der Androsselung von Stellventilen der Dampfturbine werden auch im Wasser-Dampf-Kreislauf der Dampfturbine vorgesehene Niederdruckvorwärmer, die mittels Anzapfdampf aus der Dampfturbine beheizt werden, abgeschaltet. Ein gleichzeitig durch die Niederdruck-vorwärmer geführter Kondensatstrom kann innerhalb weniger Sekunden gestoppt und wieder erhöht werden. Diese Maßnahme zur schnellen Leistungsregelung in fossil befeuerten Kraftwerksblöcken durch Abschaltung der Niederdruck-vorwärmung mit Kondensatstop ist z.B. in der Deutschen Patentschrift DE-PS 33 04 292 beschrieben.

Eine derartige, sprungförmige Leistungserhöhung, die häufig als Reserveleistung oder kurz als Sekunden-Reserve bezeichnet wird, ist aufgrund der relativ geringen Speicherkapazität der Dampfspeicher zeitlich begrenzt. Zur Aufrechterhaltung einer Dauerzusatzleistung ist es daher erforderlich, die sogenannte Minuten-Reserve, d.h. eine innerhalb von Minuten bereitgestellte Mehrleistung, zu aktivieren. Dies wird z.B. durch Erhöhung der Feuerleistung erreicht. Dabei hängen Totzeit und Änderungsgeschwindigkeit dieser Leistungserhöhung vom Krafzwerkstyp ab, d.h. ob der jeweilige Kraftwerksblock z.B. eine mit Erdöl oder Erdgas befeuerte Dampfkraftanlage oder eine mit Kohle befeuerte Gas- und/oder Dampfturbinen-Anlage ist; vgl. z.B. "ElektrizLtätswirtschaft", Jg. 74 (1975), Heft 24, S. 884 bis 894.

Die beim Betrieb eines Kraftwerksblockes vorzuhaltende Sekunden-Reserve erhöht die Brennstoffkosten um den durch eine Androsselung der Turbinenstellventile bedingten Verlust. Dies ist insbesondere bei einem störungsfreien Betrieb, d.h. bei einer ausgeglichenen Leistungsbilanz zwischen Erzeugung und Verbrauch der elektrischen Energie, unwirtschaftlich.

Aufgabe der Erfindung ist es, eine wirtschaftliche Möglichkeit zur Steuerung von Kraftwerksböcken in einem elektrischen Energieversorgungssystem anzugeben, wobei sowohl ein vorgegebenes Zuverlässigkeitsniveau der Energie- oder Stromversorgung eingehalten, als auch eine unnötig hohe Reserveleistung vermieden wird.

Diese Aufgabe wird bei einem Führungsgerät der eingangs genannten Art erfindungsgemäß gelöst durch die kennzeichnenden Merkmale des Anspruchs 1.

Bei dem Führungsgerät, das eine über ein Datenübertragungselement mit jedem zu steuernden Kraftwerksblock verbundene erste Steuereinheit umfaßt, die blockspezifische Meßgrößen empfängt und blockspezifische Führungsgrößen abgibt, wertet die Steuereinheit unter Berücksichtigung von Speicherwerten die Meßgrößen zyklisch aus und legt für einen oder jeden Kraftwerksblock einen Steuerbefehl fest. Ein derartiger Steuerbefehl kann ein An- oder Abfahrbefehl für einen Kraftwerks block sein. Die erste Steuereinheit legt zyklisch für einen bestimmten Zeitraum, z.B. für 24 Stunden, für jeden Kraftwerksblock einen Einsatzplan und einen Blockreserve-Plan fest. Dazu bestimmt die Steuereinheit für jeden Kraftwerksblock einen Sollwert für dessen Anteil an einer insgesamt abzudeckenden Netzlast und einen Sollwert für dessen Anteil an einer Gesamtreserveleistung (Gesamt-Sekundenreserve).

Die vorgehaltene Gesamtreserveleistung wird zweckmäßigerweise laufend an die Erfordernisse des Netzes angepaßt. Dazu ist die erste Steuereinheit verbunden mit einer zweiten Steuereinheit, die einen Korrekurwert für die auf die einzelnen Kraftwerksblöcke aufzuteilende Gesamtreserveleistung an die erste Steuereinheit abgibt, die ihrerseits jedem Kraftwerksblock eine korrigierte Blockreserve-Leistung zuordnet. Der Korrekturwert wird ermittelt aus einer Abweichung eines Istwertes von einem Zielwert. Dabei kann der Zielwert eine vorgegebene Leistungserhöhung innerhalb eines vorgegebenen Zeitraums sein, z.B. die eingangs erwähnte Leistungserhöhung von 2,5 % der Nennleistung innerhalb von 5 Sekunden (DVG-Vorgabe). Der Zielwert kann aber auch ein vorgegebenes Netzfrequenzminimum von z.B. 49 Hz sein. Liegt der Istwert innerhalb eines vorzugsweise einstellbaren Toleranzbandes des Zielwertes, so legt die erste Steuereinheit den Einsatz- und/oder Reserveplan fest.
In vorteilhafter Weiterbildung des Führungsgerätes ist eine mit der ersten und der zweiten Steuereinheit verbundene erste Recheneinheit vorgesehen, die aus blockspezifischen Meßgrößen und aus blockspezifischen konstanten Größen eines Kraftwerksblocks eine für die erste Steuereinheit maßgebliche Reserveleistung dieses Kraftwerksblocks bestimmt. Diese Reserveleistung ist eine innerhalb von Sekunden bereitgestellte zusätzliche Leistung, die zweckmäßigerweise zyklisch ermittelt wird.

Eine weitere zweckmäßige Weiterbildung des Führungsgerätes besteht darin, aus blockspezifischen Meßgrößen und aus blockspezifischen konstanten Größen die Totzeit und die Änderungsgeschwindigkeit für eine von diesem Kraftwerksblock bereitzustellende Dauerzusatzleistung (Minuten-Reserve) zu ermitteln. Dazu ist eine mit der ersten Steuereinheit verbundene zweite Recheneinheit vorgesehen.

Bei Zugrundelegung eines den Ausfall der größten Einspeiseleistung simulierenden Störfalls berechnet die zweite Steuereinheit Störungsabläufe anhand von Daten aus der ersten Steuereinheit. Alternativ können der zweiten Steuereinheit auch Verläufe tatsächlicher Netzstörungen zugeführt werden, aus denen korrigierte Daten für das Modell, d.h. verbesserte Modelldaten, berechnet werden. Dazu ist vorteilhafterweise ein Speicher zum Ablegen von Daten vorgesehen, die aus Änderungen der Leistungsverteilung im Energieversorgungssystem abgeleitet sind. Mittels dieser Daten können in der zweiten Steuereinheit abgelegte Parameter modifiziert und an das reale Netzverhalten angepaßt werden.

Die mit der Erfindung erzielten Vorteile bestehen insbesondere darin, daß mittels des Führungsgeräts durch eine in praktisch beliebigen Zeitabständen automatisch durchführbare Anpassung an die Erfordernisse des Energieversorgungsnetzes eine besonders günstige Höhe der vorgehaltenen GesamtreserveLeistung erreicht wird. Dabei wird einerseits ein vorgegebenes Zuverlässigkeitsniveau der Stromversorgung eingehalten. Andererseits werden eine unnötig hohe Sekunden-Reserve und damit hohe Brennstoffkosten vermieden.

Ausführungsbeispiele der Erfindung werden anhand einer Zeichnung näher erläutert. Darin zeigen:
- FIG 1: in einem Blockschaltbild an ein elektrisches Netz angeschlossene Kraftwerksblöcke, und die zur automatischen Steuerung dieser Kraftwerksblöcke dienenden Steuer- und Recheneinheiten eines Führungsgerätes,
- FIG 2: in einem vergrößerten Ausschnitt eine erste Steuereinheit des Führungsgerätes gemäß Figur 1, und
- FIG 3: in einem weiteren vergrößerten Ausschnitt eine zweite Steuereinheit des Führungsgerätes gemäß Figur 1.

Einander entsprechende Teile sind in allen Figuren mit den gleichen Bezugszeichen versehen.

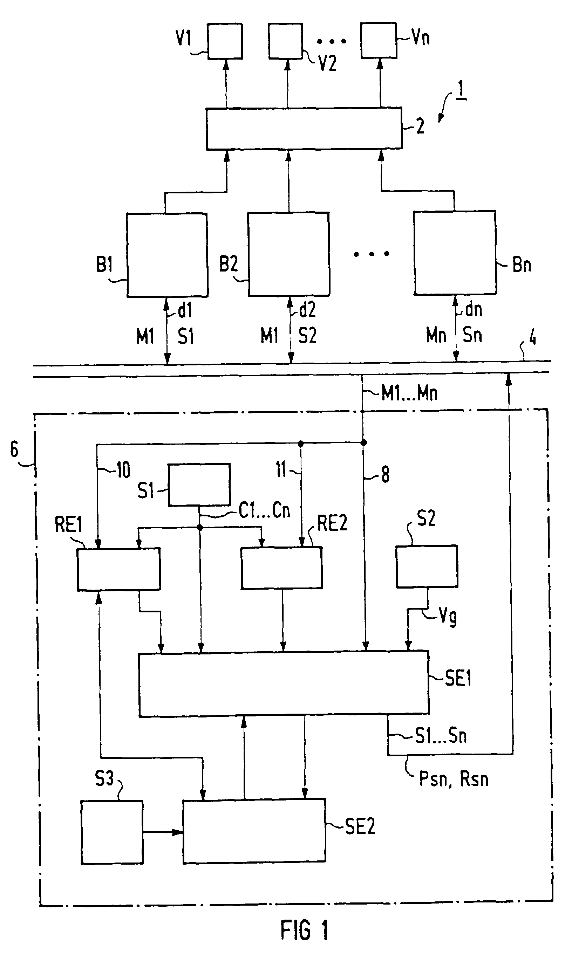

In Figur 1 ist beispielhaft ein Energieversorgungssystem 1 dargestellt, das ein elektrisches Netz 2 mit einer Anzahl von Kraftwerksblöcken B1 ... Bn und Verbrauchern V1 ... Vn umfaßt. Die Kraftwerksblöcke B1 ... Bn sind über Datenleitungen d₁...dₙ an einen Datenbus 4 angeschlossen, der mit einem Führungsgerät 6 verbunden ist. Anstelle eines für alle Kraftwerksblöcke B1 ... Bn gemeinsamen Datenbusses 4 kann auch für jeden Kraftwerksblock Bn ein separates Datenübertragungselement 4 vorgesehen sein.

Das Führungsgerät 6 umfaßt eine erste Steuereinheit SE1, die mit einer zweiten Steuereinheit SE2 verbunden ist. Das Führungsgerät 6 umfaßt weiter eine mit der ersten Steuereinheit SE1 und mit der zweiten Steuereinheit SE2 verbundene erste Recheneinheit RE1 sowie eine mit der ersten Steuereinheit SE1 verbundene zweite Recheneinheit RE2. Es umfaßt ferner zwei jeweils mit der ersten Steuereinheit SE1 verbundene Datenspeicher S1 und S2 sowie einen mit der zweiten Steuereinheit SE2 verbundenen Datenspeicher S3.

Die erste Steuereinheit SE1 empfängt - wie durch den Pfeil 8 angedeutet - blockspezifische Meßgrößen M1 ... Mn über den Datenbus 4 von den einzelnen Kraftwerksblöcken B1 ... Bn. Vorzugsweise werden die Meßgrößen Mn der ersten Steuereinheit SE1 über die erste Recheneinheit RE1 zugeführt, in der die Meßgrößen Mn mit einer blockspezifischen Kennung versehen werden können. Dazu ist die beispielhaft für alle Kraftwerksblöcke Bn gemeinsame Recheneinheit RE1 - wie durch den Pfeil 10 angedeutet - mit dem Datenbus 4 verbunden. Die zweite Recheneinheit RE2 ist - wie durch den Pfeil 11 angedeutet-ebenfalls mit dem Datenbus 4 verbunden.

Es können auch mehrere Recheneinheiten RE1 vorgesehen sein. So kann z.B. für jeden Kraftwerksblock Bn eine separate Recheneinheit RE1 vorgesehen sein, die blockspezifische Meßgrößen Mn empfängt und diese an die erste Steuereinheit SE1 abgibt. Die blockspezifischen Meßgrößen Mn sind z.B. Istwerte der Blockleistung (Pᵢ) und des Frischdampfdrucks (pᵢ) sowie Ventilstellungen und in oder an einem Turbinengehäuse gemessene Temperaturen.

Aus dem Speicher S1 werden der ersten Steuereinheit SE1 und der ersten Recheneinheit RE1 konstante blockspezifische Größen C1 ... Cn zugeführt. Diese konstanten Größen Cn sind z.B. eine maximale und eine minimale Blockleistung (Pₘₐₓ, Pₘᵢₙ) sowie ein maximaler und ein minimaler Frischdampfdruck (pₘₐₓ, pₘᵢₙ). Weitere blockspezifische konstante Größen Cn sind - unter Berücksichtigung des jeweiligen Blocktyps - z.B. ein Leistungs-Regelbereich, eine maximale Reserveleistung (Sekunden- und/oder Minuten-Reserve), ein leistungsabhängiger Verlauf eines Wärmeverbrauchs sowie Anfahr-, Fahr- und Stillstandszeiten.

Ferner werden der ersten Steuereinheit SE1 aus dem Speicher S2 netzspezifische Daten zugeführt. Diese in dem Speicher S2 abgelegten Daten sind allgemeine Vorgaben Vg für den Netzbetrieb. Eine solche Vorgabe kann ein Zielwert, z.B. 49 Hz, eines nicht zu unterschreitenden Frequenzminimums sein. Die Vorgabe V kann aber auch der zeitliche Verlauf einer Gesamtreserveleistung sein. In diesem Fall sind dann als Eckwerte die eingangs genannten DVG-Vorgaben, d.h. eine Erhöhung der Nennleistung um 5 % innerhalb von 30 Sekunden bzw. 2,5 % innerhalb von 5 Sekunden, festgelegt.

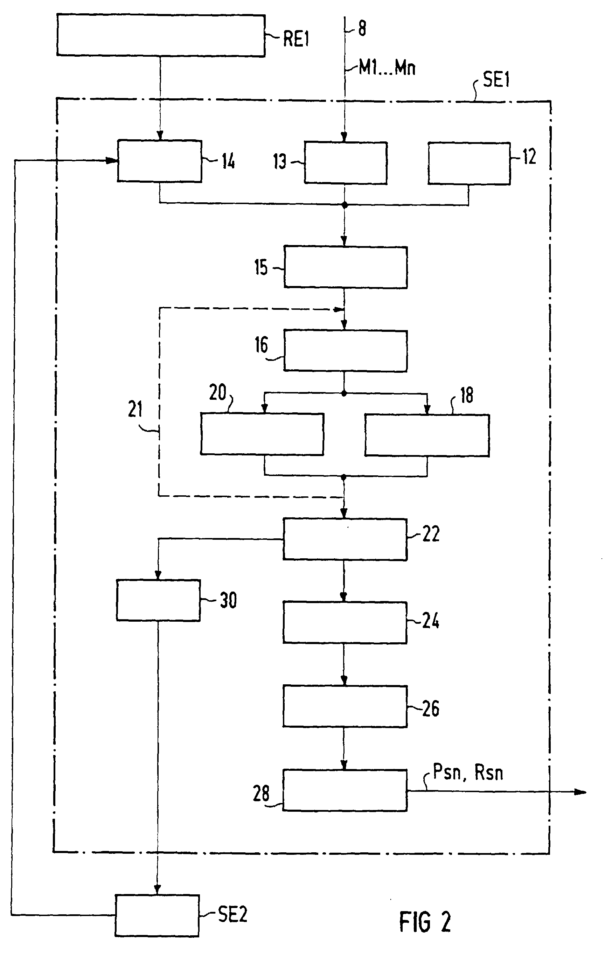

Wie anhand der Figur 2 später näher erläutert wird, wertet die erste Steuereinheit SE1 zyklisch unter Berücksichtigung der Größen C1 ... Cn und der Vorgaben V die Meßgrößen M1 ... Mn aus und bestimmt für einen oder mehrere Kraftwerksblöcke B1 ... Bn einen Stellbefehl S. Dieser Stellbefehl S wird als blockspezifischer Stellbefehl S1 ... Sn über den Datenbus 4 dem oder jedem zu steuernden Kraftwerksblock B1 ... Bn zugeführt. Der Stellbefehl S ist z.B. ein Anfahrbefehl für einen zusätzlich einzuschaltenden Kraftwerksblock Bn oder ein Abfahrbefehl für einen abzuschaltenden Kraftwerksblock Bn. Die erste Steuereinheit SE1 kann zeitlich aufeinanderfolgende Steuerbefehle S1 ... Sn zum Anfahren oder Abschalten mehrerer Kraftwerksblöcke B1 ... Bn abgeben.

Die Festlegung einesAnfahrbefehls Sn erfolgt vorteilhafterweise unter Berücksichtigung der Vorgeschichte eines Kraftwerksblocks Bn. So ermittelt die erste Steuereinheit SE1 unter Berücksichtigung einer Stillstandszeit und einer für eine Synchronisation des Kraftwerksblocks Bn mit dem Netz 2 benötigten Zeit eine blockspezifische Anfahrzeit.Entsprechend dieser Anfahrzeit gibt die erste Steuereinheit SE1 einen Stellbefehl Sn zum Anfahren dieses Kraftwerksblocks Bn bereits vor einer tatsächlich benötigten und als wirtschaftlich ermittelten Leistungseinspeisung dieses Kraftwerksblocks Bn in das Netz 2 ab.

Die erste Steuereinheit SE1 teilt vorteilhafterweise die insgesamt abzudeckende Netzlast und die Gesamtreserveleistung auf und bestimmt für jeden Kraftwerksblock Bn einen Sollwert (Pₛₙ) für dessen Anteil an einer insgesamt abzudeckenden Netzlast und einen Sollwert (Rₛₙ) für dessen Anteil an einer Gesamtreserveleistung. Bei der Aufteilung der abzudeckenden Netzlast und der Gesamtreserveleistung wird zweckmäßigerweise als ein wesentliches Kriterium die Effektivität oder Wirtschaftlichkeit des jeweiligen Kraftwerksblocks Bn berücksichtigt, z.B. im Hinblick auf die einzusetzende Primärenergie und den Wirkungsgrad.

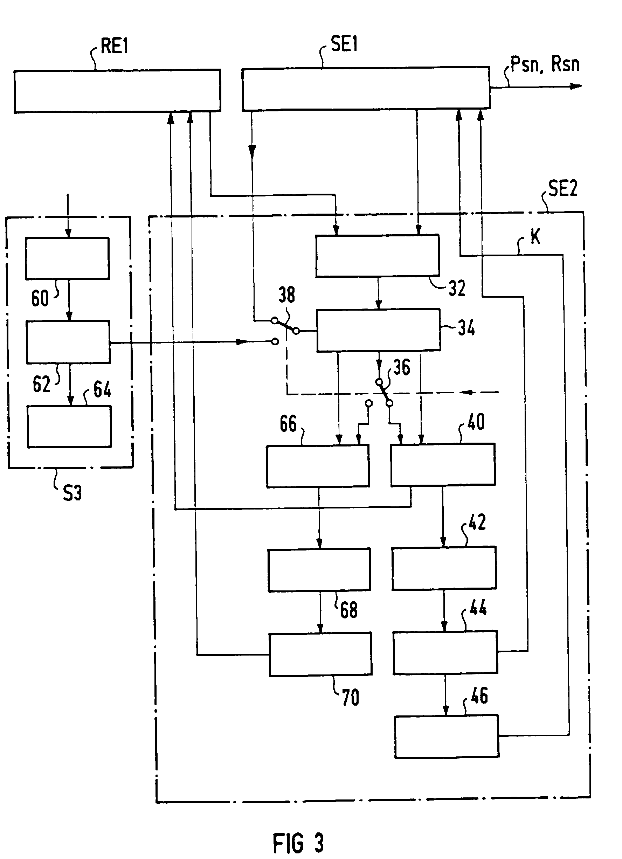

Die erste Steuereinheit SE1 umfaßt gemäß Figur 2 daher einen ersten Datenspeicher 12, in dem Modelldaten zur Abbildung des jeweiligen Kraftwerksblocks Bn abgelegt sind. Derart festgelegte Daten sind z.B. die maximale und die minimale Blockleistung (Pₘₐₓ, Pₘᵢₙ). In einem zweiten Datenspeicher 13 werden die Meßwerte M1 ... Mn als On-line-Prozeßdaten zwischengespeichert. In einem dritten Datenspeicher 14 werden weitere, aufbereitete Prozeßdaten aus der ersten Recheneinheit RE1 zwischengespeichert. Aus diesen in den Datenspeichern 12, 13 und 14 abgelegten Daten wählt eine Einrichtung 15 zur Dateninitialisierung die für einen aktuellen Anwendungsfall erforderlichen Daten aus. Ein Blockauswahlrechner 16 wählt zunächst anhand dieser Daten den oder die besonders geeigneten Kraftwerksblöcke Bn aus. Die Leistungsaufteilung auf einzelne ausgewählte Kraftwerksblöcke Bn erfolgt in einem Rechner 18. Eine Berechnung und Überprüfung der Reserveleistung erfolgt in einem Rechner 20. Sind die anhand einer Modellrechnung vorgegebenen Bedingungen für die Gesamtreserveleistung nicht erfüllt, so wird im Blockauswahlrechner 16 z.B. ein weiterer Kraftwerksblock Bn ausgewählt. Wie durch den strichlinierten Pfeil 21 dargestellt, wird dieser Prozeß in einer Schleife so lange wiederholt, bis eine die Reservebedingung erfüllende Blockauswahl getroffen ist. Sind diese Bedingung und ein in einer Vergleichsstufe 44 (Figur 3) der zweiten Steuereinheit SE2 abgefragtes - aus den Vorgaben Vg abgeleitetes - netzspezifisches Kriterium erfüllt, so erfolgt in einer Stufe 22 der ersten Steuereinheit SE1 eine Verzweigung zu einer Stufe 24. In dieser Stufe 24 erfolgt eine kurzzyklische Aktualisierung der Lastaufteilung und in einer weiteren Stufe 26 erfolgt eine kurzzyklische Aktualisierung der Reserveaufteilung. Die in einer dritten Stufe 28 gebildeten, blockspezifischen Sollwerte für Teillasten Pₛₙ und Teilreserveleistungen Rₛₙ werden über den Datenbus 4 den entsprechenden Kraftwerksblöcken B1 ... Bn als Stellbefehle oder Führungsgrößen S1 ... Sn, z.B. für deren Turbinen- und/oder Generatorregler, zugeführt.

Ergibt der Vergleich in der Vergleichsstufe 44 der zweiten Steuereinheit SE2, daß der Soll- oder Zielwert des gesuchten Kriteriums nicht erfüllt ist,so erfolgt in der Stufe 22 eine Verzweigung zu einer Stufe 30, in der ein aktueller Einsatzplan für die Lastaufteilung und ein Reserveplan für die Reserveaufteilung abgelegt werden. Die von der ersten Steuereinheit SE1 erstellten Daten für die aktuelle Gesamtreserveleistung werden der zweiten Steuereinheit SE2 zugeführt.

Wie in Figur 3 dargestellt, werden diese Daten zunächst in einem Speicher 32 abgelegt. In diesem Speicher 32 sind auch Grunddaten und Sollwerte zur Beschreibung des Netzes 2 und zur Abbildung der Kraftwerksblöcke B1 ... Bn sowie ein Simulationsmodell für einen Blockausfall abgelegt. In diesem Modell wird z.B. die größte Ausfalleistung, d.h. ein Ausfall des die aktuell höchste Leistung in das Netz 2 einspeisenden Kraftwerksblocks Bn, simuliert. Ein Auswahlrechner 34 liest in der dargestellten Stellung der Schalter 36 und 38 die zur Berechnung eines Störungsablaufs benötigten Daten aus dem Datenspeicher 32 aus und gibt diese an einen Rechner 40 weiter. Dort wird der Störungsablauf unter Berücksichtigung der aktuellen Gesamtreserveleistung berechnet. Ein dabei ermittelter zeitlicher Verlauf der Gesamtreserveleistung wird vom Rechner 40 an die erste Recheneinheit RE1 abgegeben. Ein aus dem Störungsablauf abgeleiteter und in einem Ergebnisspeicher 42 abgelegter Istwert des gesuchten, netzspezifischen Kriteriums wird in der Vergleichsstufe 44 mit dem Zielwert des gesuchten Kriteriums verglichen. Dieses Kriterium ist, wie bereits erwähnt, z.B. ein Frequenzminimum bei einem relativ kleinen Inselnetz oder ein Sollverlauf der Gesamtreserveleistung als Funktion der Zeit bei einem relativ großen Verbundnetz (DVG-Vorgabe).

Ist das gesuchte Kriterium nicht erfüllt, so wird der ersten Steuereinheit SE1 ein in einer Stufe 46 ermittelter Korrekturwert K zugeführt. Liegt z.B. der Istwert um 10 % außerhalb eines einstellbaren Toleranzbandes des Zielwertes, so ist der Korrekturwert K größer oder kleiner als eins. Von der ersten Steuereinheit SE1 wird dann in einem anschließenden Durchlauf, d.h. in einem ersten Iterationsschritt, eine um z.B. 10 % erhöhte bzw. verringerte Gesamtreserveleistung vorgegeben. Dieser Iterationsprozeß mit Konvergenz auf den Zielwert wird so lange durchgeführt, bis das gesuchte Kriterium erfüllt ist. Erst dann werden der in der Stufe 30 der ersten Steuereinheit SE1 zuletzt abgelegte Einsatzplan mit den Leistungs-Sollwerten Pₛₙ und der zuletzt abgelegte Reserveplan mit den Teilreserve-Sollwerten Rₛₙ aktiviert.

Treten in dem Energieversorgungssystem 1 Störungen auf, so werden im Speicher S3 des Führungsgerätes 6 Daten abgelegt, die aus Änderungen der Lastverteilung im Energieversorgungssystem 1 abgeleitet sind. Mittels dieser Daten werden in der zweiten Steuereinheit SE2 abgelegte Parameter des Simulationsmodells verändert. Dazu werden in einer ersten Stufe 60 des Speichers S3 Netzstörungen aufgezeichnet. Die in einer weiteren Stufe 62 aufbereiteten Daten werden in einem Dokumentationsspeicher 64 abgelegt. Diese, in der Stufe 62 aufbereiteten Daten werden nach Betätigung der Schalter 36 und 38 dem Auswahlrechner 34 der zweiten Steuereinheit SE2 zugeführt, wobei der Iterationsprozeß über die Stufe 46 und die erste Steuereinheit SE1 unterbrochen ist. Die von dem Auswahlrechner 34 ausgewählten Daten aus dem Speicher S3 werden zur Identifizierung von neuen Blockparametern einer Stufe 66 der zweiten Steuereinheit SE2 zugeführt. Dort werden die dem Simulationsmodell zugrundegelegten Parameter so lange variiert, bis der aus dem Simulationsmodell berechnete Störungsablauf dem tatsächlichen Störungsverlauf entspricht oder zumindest angenähert ist. Diese Parameter werden in einem Ergebnisspeicher 68 abgelegt und können bedarfsweise, z.B. unter Berücksichtigung von in einer Wissensbasis eines (nicht dargestellten) Expertensystems abgelegten Auswahlkriterien in einer Stufe 70 selektiert und von dort der ersten Recheneinheit RE1 zugeführt werden. Diese Parameter werden aus der ersten Recheneinheit RE1 in den Datenspeicher 32 der zweiten Steuereinheit SE2 eingelesen und ersetzen dort die bisherigen Modellparameter. Dadurch wird das dem in der zweiten Steuereinheit SE2 ablaufenden Iterationsprozeß zugrundeliegende Simulationsmodell realen Netzvorgängen und Störungsabläufen weiter angepaßt.

Die in der vorstehend beschriebenen Weise von der ersten Steuereinheit SE1 des Führungsgeräts 6 ermittelte und von den Kraftwerksblöcken B1 ... Bn bereitzustellende Gesamtreserveleistung, die sich aus den Teilreserveleistungen Rₛₙ zusammensetzt, ist eine zeitlich nur begrenzt verfügbare Sekunden-Reserve. Diese zeitliche Begrenzung ist abhängig von in den Kraftwerksblöcken B1 ... Bn vorgehaltenen oder bereitgestellten Speicherkapazitäten, die in einem Anforderungsfall aktivierbar sind. Um eine bleibende oder dauerhafte Zusatzleistung (Minuten-Reserve) bereitzustellen, muß in den oder einzelnen Kraftwerksblöcken B1 ... Bn z.B. die Feuerleistung entsprechend erhöht werden. Die zweite Recheneinheit RE2 bestimmt daher aus den blockspezifischen Meßgrößen M1 ... Mn und aus den blockspezifischen konstanten Größen C1 ... Cn eine von dem entsprechenden Kraftwerksblock Bn zu aktivierende Dauerzusatzleistung oder Minuten-Reserve. Dazu dient als Maß für eine bereitzustellende Dauerzusatzleistung die zeitliche Änderung (Gradient), die aus einem zeitabhängigen Leistungsverlauf zwischen einer blockspezifischen Istleistung (Pᵢ) und einer blockspezifischen Maximalleistung (Pₘₐₓ) unter Berücksichtigung einer Totzeit ermittelbar ist. Die unter Berücksichtigung des von dem jeweiligen Kraftwerksblock Bn möglichen Leistungsverlaufs berechnete Minuten-Reserve wird einer zyklisch, z.B. in Intervallen von 15 Minuten, in der ersten Steuereinheit SE1 durchgeführten Rechnung zugrundegelegt.

## Patentansprüche

1. Führungsgerät zur automatischen Steuerung von Kraftwerksblöcken (B1 ... Bn) in einem elektrischen Energieversorgungssystem (1) mit einer über ein Datenübertragungselement (4) mit jedem zu steuernden Kraftwerksblock (Bn) verbundenen ersten Steuereinheit (SE1), die blockspezifische Meßgrößen (M1 ... Mn) empfängt und blockspezifische Führungsgrößen (S1 ... Sn) abgibt,
**dadurch gekennzeichnet**, daß die Steuereinheit (SE1) unter Berücksichtigung von Speicherwerten (C1 ... Cn) die Meßgrößen (M1 ... Mn) zyklisch auswertet und für einen oder jeden Kraftwerksblock (B1 ... 3n) einen Stellbefehl (S) , vorzugsweise einen An- oder Abfahrbefehl, festlegt, wobei die erste Steuereinheit (SE1) für jeden Kraftwerksblock (Bn) einen Sollwert (Pₛₙ) für dessen Leistungsanteil an einer insgesamt abzudeckenden Netzlast und einen Sollwert (Rₛₙ) für dessen Anteil an einer Gesamtreserveleistung bestimmt.

2. Führungsgerät nach Anspruch 1, mit einer mit der ersten Steuereinheit (SE1) verbundenen zweiten Steuereinheit (SE2) die einen Korrekturwert (K) für die auf die einzelnen Kraftwerksblöcke (B1 ... Bn) aufzuteilende Gesamtreserveleistung an die erste Steuereinheit (SE1) abgibt, wobei eine Annäherung eines Ist-Werts auf einen Zielwert erfolgt und wobei die erste Steuereinheit (SE1) jedem Kraftwerksblock (Bn) eine korrigierte Reserveleistung (Rₛₙ) zuordnet.

3. Führungsgerät nach Anspruch 2,
**dadurch gekennzeichnet**, daß der zielwert innerhalb eines einstellbaren Toleranzbandes liegt.

4. Führungsgerät nach Anspruch 2 oder 3, mit einer mit der ersten und der zweiten Steuereinheit (SE1, SE2) verbundenen ersten Recheneinheit (RE1) , die aus blockspezifischen Meßgrößen (M1 ... Mn) und aus blockspezifischen konstanten Größen (C1 ... Cn) eines Kraftwerksblocks (B1 ... Bn) eine für die erste Steuereinheit maßgebliche Reserveleistung dieses Kraftwerksblocks (B1 ... Bn) bestimmt.

5. Führungsgerät nach Anspruch 4,
**dadurch gekennzeichnet**, daß die maßgebliche Reserveleistung eine innerhalb von Sekunden bereitgestellte zusätzliche Leistung ist.

6. Führungsgerät nach einem der Ansprüche 1 bis 5,
**gekennzeichnet durch** eine mit der ersten Steuereinheit (SE1) verbundenen zweiten Recheneinheit (RE2), die aus blockspezifischen Meßgrößen (M1 ... Mn) und blockspezifischen konstanten Größen (C1 ... Cn) die Totzeit und die Änderungsgeschwindigkeit für eine von diesem Kraftwerksblock (B1 ... Bn) bereitzustellende Dauerzusatzleistung bestimmt.

7. Führungsgerät nach einem der Ansprüche 2 bis 6,
**gekennzeichnet durch** einen mit der zweiten Steuereinheit (SE2) verbundenen Speicher (S3) zum Ablegen von Daten, die aus Änderungen der Leistungsverteilung im Energieversorgungssystem (1) abgeleitet sind, wobei mittels dieser Daten in der zweiten Steuereinheit (SE2) abgelegte Parameter eines Simulationsmodells veränderbar sind.

## Claims

1. Control equipment for automatically controlling power units (B1 ... Bn) in an electrical power supply system (1) having a first control unit (SE1) which is connected via a data transmission element (4) to each power unit (Bn) to be controlled, receives power-unit-specific measured variables (M1 ... Mn) and emits power-unit-specific reference variables (S1 ... Sn), characterized in that the control unit (SE1) evaluates the measured variables (M1 ... Mn) cyclically, taking account of stored values (C1 ... Cn), and defines a control instruction (S), preferably a start instruction or a stop instruction, for one or each power unit (B1 ... Bn), the first control unit (SE1) determining, for each power unit (Bn), a required value (Pₛₙ) for its power element of a grid load which is to be covered overall, and determining a required value (Rₛₙ) for its element of an overall power reserve.

2. Control equipment according to Claim 1, having a second control unit (SE2) which is connected to the first control unit (SE1) and emits a correction value (K) to the first control unit (SE1) for the total power reserve which is to be split between the individual power units (B1 ...Bn), an approximation of an actual value to a target value being carried out, and the first control unit (SE1) assigning a corrected power reserve (Rₛₙ) to each power unit (Bn).

3. Control equipment according to Claim 2, characterized in that the target value is Within an adjustable tolerance band.

4. Control equipment according to Claim 2 or 3, having a first computation unit (RE1) which is connected to the first control unit (SE1) and to the second control unit (SE2) and determines, from power-unit-specific measured variables (M1 ... Mn) and from power-unit-specific constant parameters (C1 ... Cn) of a power unit (B1 ... Bn), a power reserve which governs the first control unit for this power unit (B1 ... Bn).

5. Control equipment according to Claim 4, characterized in that the governing power reserve is an additional power provided within seconds.

6. Control equipment according to one of Claims 1 to 5, characterized by a second computation unit (RE2) which is connected to the first control unit (SE1) and determines, from power-unit-specific measured variables (M1 ... Mn) and power-unit specific constant parameters (C1 ... Cn), the delay time and the rate of change for long-term additional power which must be provided by this power unit (B1 ... Bn) .

7. Control equipment according to one of Claims 2 to 6, characterized by a memory (S3), which is connected to the second control unit (SE2), for storing data which are derived from changes in the power distribution in the power supply system (1), parameters, which are stored in the second control unit (SE2), of a simulation model being variable by means of these data.

## Revendications

1. Appareil de conduite pour la commande automatique de blocs générateurs (B1 à Bn) dans un système d'alimentation en énergie électrique (1), comportant une première unité de commande (SE1) qui est reliée par l'intermédiaire d'un élément de transmission de données (4) à chaque bloc générateur (Bn) à commander, qui reçoit des grandeurs mesurées (M1 à Mn) spécifiques aux blocs et qui fournit des grandeurs de conduite (S1 à Sn) spécifiques aux blocs,
caractérisé par le fait que l'unité de commande (SE1) évalue de manière cyclique les grandeurs mesurées (M1 à Mn) en tenant compte de valeurs mémorisées (C1 à Cn) et détermine pour un ou chaque bloc générateur (B1 à Bn) une instruction de réglage (S), de préférence une instruction de démarrage ou d'arrêt, la première unité de commande (SE1) déterminant pour chaque bloc générateur (Bn) une valeur de consigne (Psn) correspondant à sa part de puissance dans une charge du réseau à couvrir globalement et une valeur de consigne (Rsn) correspondant à sa part dans une puissance de réserve globale.

2. Appareil de conduite selon la revendication 1, comportant une seconde unité de commande (SE2) qui est reliée à la première unité de commande (SE1) et qui fournit à la première unité de commande (SE1) une valeur de correction (K) pour la puissance de réserve globale à répartir sur les différents blocs générateurs (B1 à Bn), un rapprochement entre une valeur réelle et une valeur souhaitée s'effectuant et la première unité de commande (SE1) associant à chaque bloc générateur (Bn) une puissance de réserve corrigée (Rₛₙ).

3. Appareil de conduite selon la revendication 2,
caractérisé par le fait que la valeur souhaitée se trouve à l'intérieur d'un domaine de tolérance réglable.

4. Appareil de conduite selon la revendication 2 ou 3, comportant une première unité de calcul (RE1) qui est reliée aux première et seconde unités de commande (SE1, SE2) et qui détermine à partir de grandeurs mesurées (M1 à Mn) spécifiques aux blocs et à partir de grandeurs constantes (C1 à Cn) spécifiques à un bloc générateur (B1 à Bn) une puissance de réserve, décisive pour la première unité de commande, de ce bloc générateur (B1 à Bn).

5. Appareil de conduite selon la revendication 4,
caractérisé par le fait que la puissance de réserve décisive est une puissance supplémentaire fournie en quelques secondes.

6. Appareil de conduite selon l'une des revendications 1 à 5,
caractérisé par une seconde unité de calcul (RE2) qui est reliée à la première unité de commande (SE1) et qui détermine à partir de grandeurs mesurées (M1 à Mn) spécifiques aux blocs et à partir de grandeurs constantes (C1 à Cn) spécifiques aux blocs le temps mort et la vitesse de variation pour une puissance supplémentaire permanente à fournir par ce bloc générateur (B1 à Bn).

7. Appareil de conduite selon l'une des revendications 2 à 6,
caractérisé par une mémoire (S3) qui est reliée à la seconde unité de commande (SE2) et qui est destinée à mémoriser des données qui sont déduites de variations de la répartition de la puissance dans le système d'alimentation en énergie (1), des paramètres, mémorisés dans la seconde unité de commande (SE2), d'un modèle de simulation peuvent être modifiés à l'aide des ces données.
